# EUROPÄISCHE PATENTSCHRIFT

(11) **EP 0 639 248 B1**
(45) Veröffentlichungstag und Bekanntmachung des Hinweises auf die Patenterteilung: **18.06.1997**
(21) Anmeldenummer: 94906817.5
(22) Anmeldetag: 02.03.1994
(51) Int. Cl.: F16G 11/00

(54) **SEILENDVERBINDUNG FÜR EIN KUNSTSTOFFSEIL**
CONNECTOR FOR SYNTHETIC-FIBRE ROPES
PIECE DE RACCORDEMENT POUR CORDE EN MATIERE SYNTHETIQUE

(30) Priorität: 05.03.1993 DE 4308827
(43) Veröffentlichungstag der Anmeldung: 22.02.1995
(73) Patentinhaber: INVENTIO AG, CH-6052 Hergiswil NW (CH)
(72) Erfinder: DE ANGELIS, Claudio, CH-6037 Root (CH)
(86) Internationale Anmeldenummer: CH9400044
(87) Internationale Veröffentlichungsnummer: WO9420770

(56) Entgegenhaltungen:
- DE-B- 1 292 457
- DE-C- 3 403 101
- GB-A- 106 207
- US-A- 1 723 836
- US-A- 4 117 574
- US-A- 4 493 134

## Beschreibung

Die Erfindung betrifft eine Seilendverbindung für ein Kunststoffseil bestehend aus einer Einrichtung zum Befestigen einer Kabine oder eines Gegengewichtes einer Aufzugsanlage und einer Einrichtung zum Festhalten des Kunststoffseils, welche nächst dem Eintritt des Seils einen ersten hülsenförmigen Abschnitt aufweist, dessen Innenquerschnitt mindestens so weit ist wie der Querschnitt des einlaufenden Seils und dessen Einlauf in Richtung des gespannten Seils ausgerichtet ist und welche einen nachgeordneten zweiten Abschnitt aufweist, in dem das Seil vorzugsweise durch Seitenpressung gehalten wird, die mit ansteigender Zugkraft des Seiles zunimmt.

Aus der DE-AS 12 92 457 ist eine Vorrichtung bekannt geworden, welche aus einer festen konischen Hülse besteht, die ein aufgespleisstes und mittels Harz zu einer Seilbirne erweitertes Seilende umgibt. Die Neigung der Mantelfläche der Hülse gegenüber der Kabelachse ist kleiner als die Neigung der Mantelfläche der Seilbirne gegenüber der Kabelachse. Dadurch soll erreicht werden, dass die kabelendseitige Querbeanspruchung der Fäden in der Seilbirne an der Stelle minimal ist, an der die Längsbeanspruchung der Fäden maximal ist.

Bei der vorgeschlagenen Lösung können vor dem Bereich der maximalen Querbeanspruchung die Zugkräfte nur zu sehr geringen Anteilen von der Hülse aufgenommen werden und die Vorrichtung weist daher kaum Vorteile gegenüber gebräuchlichen Seilklemmen auf. Lunkerbildungen beim Giessen der Seilbirne können unter Last zu einem Sicherheitsrisiko werden. Ein weiterer Nachteil der bekannten Vorrichtung liegt darin, dass bei starken Seilen mit entsprechend grosser Zugfestigkeit voluminöse Verankerungen notwendig sind, da die Durchmesser von Seilbirne und Hülse sehr gross werden.

Aus der Patentschrift GB 106 207 ist eine Seilklemme für im Aufzugsbau verwendete Stahlseile bekannt geworden, bei der das Seil zwischen zwei keilförmige Klemmplatten eingespannt wird. Diese werden durch ein U-förmiges, zu den Schenkelenden hin enger werdendes Teil, an dem die Last angreift, gegeneinandergepresst. Mehrere Ringe umschliessen das U-förmige Teil, um ein Aufweiten unter Last zu verhindern. Die Klemmplatten weisen auf ihren Innenseiten je eine schwach wellenförmig verlaufende Halbnut auf. Um eine ausreichende Klemmkraft zu erhalten, sind die Halbnuten flacher als die halbe Seilstärke ausgebildet, sodass zwischen den Klemmplatten ein durchgehender Spalt bleibt. Das aus der Nut austretende Seilende ist aufgespleisst in einer konischen Hülse gefasst, die mit Metall ausgegossen ist.

Die bekannte Seilklemme ist für Stahlseile konstruiert und ihre Wirkung beruht auf einer sehr hohen Querpressung des Seils. Deshalb ist sie für Kunststoffseile, bei denen die Zugfestigkeit durch Querbeanspruchung der Fasern beträchtlich gemindert wird, nicht einsetzbar. Eine Verminderung der Zugfestigkeit durch die Seilendverbindung würde dickere Seile, grösseren technischen Aufwand und höhere Kosten bedeuten. Ein weiterer Nachteil der bekannten Seilklemme liegt in dem aufwendigen Herstellungsverfahren der schlangenförmig in die Klemmplatten in sich ändernder Tiefe eingeschnittenen Halbnuten.

Aus der Patentschrift US 4 117 574 ist eine Endverbindung für eine Angelschnur bekannt geworden. Sie weist ein kegelstumpfförmiges Ende mit einer zentralen Bohrung auf, die mit einer an der Oberfläche der Endverbindung verlaufenden spiralförmigen Nut verbunden ist. Dadurch soll ein rasches Verbinden der Hakenschnur mit der Angelschnur erreicht werden ohne die Angelschnur kürzen zu müssen.

Für grosse Lasten tragende Seile ist diese Endverbindung nicht brauchbar.

Die Erfindung, wie sie im Anspruch 1 gekennzeichnet ist, löst die Aufgabe, die Nachteile der bekannten Einrichtungen zu vermeiden und eine für Kunststoffseile geeignete Seilendverbindung für grosse Lasten zu schaffen, bei der die hohe Zugfestigkeit des Hochfestfaserseils ausgenutzt werden kann. Die Seilverbindung erfüllt insbesondere die Anforderungen im Aufzugsbau, wo grosse Lasten auf kleiner Montagefläche befestigt werden müssen.

Die durch die Erfindung erreichten Vorteile sind im wesentlichen darin zu sehen, dass das Seil im Eintrittbereich quer zum Faserverlauf nicht durch Klemmen beansprucht wird und die Zugkraft im Seil weitgehend über Reibung von der Endverbindung aufgenommen wird. Besonders vorteilhaft ist, dass die Seilendverbindung in der Richtung des gespannten Seils gesehen von schlanker Gestalt ist, was eine enge Anordnung von parallel verlaufenden Seilen ermöglicht. Ausserdem wirken sich grosse Seildurchmesser nicht auf die Breite sondern lediglich auf die Länge der Seilendverbindung aus. Ein weiterer Vorteil ist darin zu sehen, dass die durch die Zugkraft verursachte Dehnung des Seils mit der erfindungsgemässen Seilendverbindung leicht durch Nachspannen ausgeglichen werden kann. Vorteilhaft ist auch, dass bei Zugbeanspruchung keine Drehmomente an der Seilendverbindung entstehen.

Mehrere Ausführungsbeispiele der Erfindung sind in der Zeichnung dargestellt und in der nachfolgenden Beschreibung näher erläutert. Es zeigen:
- Fig. 1: eine teilgeschnittene Seitenansicht einer erfindungsgemässen Seilendverbindung mit einem zylindrischen Kegel und einer Glocke gemäss einem ersten Ausführungsbeispiel,
- Fig. 2: eine vergrösserte Draufsicht auf die Seilendverbindung gemäss Fig. 1,
- Fig. 3: ein zweites Ausführungsbeispiel einer Seilendverbindung im Längsschnitt,
- Fig. 4: eine teilgeschnittene Seitenansicht eines dritten Ausführungsbeispiels mit asymmetrischem Kegel und asymmetrischer Glocke und
- Fig. 5: eine räumliche Darstellung eines vierten Ausführungsbeispiels mit Halteplatten.

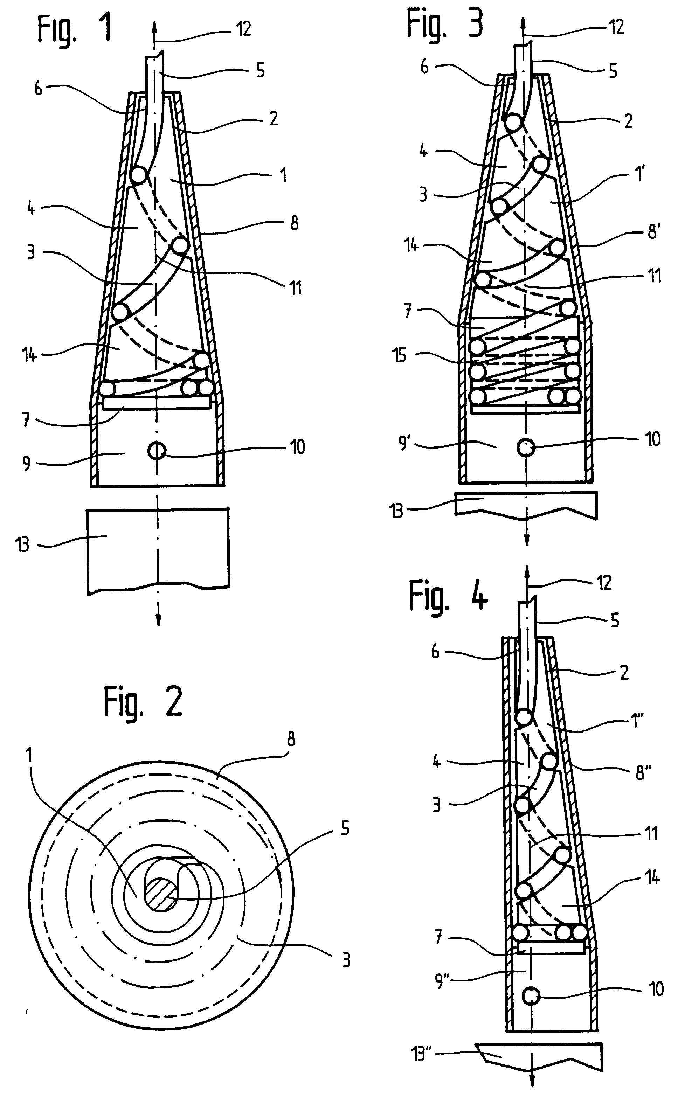

In den Fig. 1 bis 4 ist mit 1 ein Haltekörper mit einer auf seiner kegelstumpfförmigen Mantelfläche 2 spiralförmig eingeschnittenen Nut 3 bezeichnet. In die Nut 3 ist ein Kunststoffseil 5 eingelegt. Die Nutbreite entspricht mindestens dem Seildurchmesser. Das Seil 5 tritt zunächst geradlinig in einen zentrischen Einlauf 6 am oberen Ende des Haltekörpers 1 ein. Die Tiefe der Nut 3 entspricht in einem ersten hülsenförmigen Abschnitt 4 nahe dem Eintritt des Seiles 5 dem Seildurchmesser und nimmt im weiteren Verlauf nach unten hin zunehmend ab, so dass das Kunststoffseil 5 von oben nach unten gesehen zunehmend aus der Nut 3 hervortritt. Die Steigung der Nut 3 nimmt vom Einlauf 6 her gesehen zunehmend ab. Die Krümmung des Seils nimmt dementsprechend allmählich immer stärker werdend zu, vorzugsweise bis die maximale Biegsamkeit des Seils erreicht ist. In einem zweiten Abschnitt 14 beträgt der Krümmungsradius je nach Steifigkeit des Kunststoffseils 5 das ein- bis sechsfache des Seildurchmessers. Der Eintritt des Seils 5 in den Haltekörper 1 erfolgt in Richtung des unter Last gespannten Seils, d.h. normalerweise in vertikaler Richtung, wie in Figur 1 dargestellt. Das Seilende verläuft am unteren Körperende 7 aufgrund der abnehmenden Steigung der Nut 3 quer zur Eintrittsrichtung, also in Figur 1 horizontal.

Der kegelstumpfförmige Haltekörper 1 wird von einer koaxialen kegelförmigen Glocke 8 umschlossen, die am oberen Ende eine Öffnung für den Seileintritt aufweist und am unteren Ende in einen zylinderförmigen Hülsenteil 9 mit einer als Bohrungen 10 ausgebildeten Einrichtung zum Befestigen einer Last, die mit 13 angedeutet ist, übergeht. Der Pfeil an der Last 13 gibt deren Wirkungsrichtung an. Die Bohrungen 10 liegen in der Achse 11 einer am Seil 5 angreifenden Zugkraft 12. Durch die Bohrungen 10 ist zum Anbringen der Last 13 beispielsweise eine nicht dargestellte Stange einschiebbar. Im Lastfall liegt die Glocke 8 am Körper 1 an und presst das Seil 5 je nach Nuttiefe mehr oder weniger stark in die Nut 3. Bei entlastetem Seil verhindert die Glocke ein Herausspringen des Seils 5 aus der Nut 3.

Die in dem Seil 5 in Richtung der Achse 11 wirksame Zugkraft 12 wird sukzessive über Reibung in der Nut 3 auf den Haltekörper 1 übertragen. In dem zweiten nachgeordneten Abschnitt 14 des Haltekörpers 1 wird das Kunststoffseil 5 von oben nach unten gesehen von der Glocke 8 zunehmend in die Nut 3 gepresst. Die dabei allmählich mit zunehmender Abnahme der Zugkraft 12 im Haltekörper 1 ansteigenden Querkräfte bleiben örtlich so gering, dass die tatsächliche Zugfestigkeit des Seils 5 nicht gemindert wird.

Bei durch die Zugbeanspruchung verursachter Dehnung des Seils 5 kann dieses leicht nachgespannt werden, indem es vom Haltekörper 1 abgewickelt und anschliessend mit verkürzter Seillänge wieder aufgewickelt wird. Werkzeuge werden für diesen Vorgang nicht benötigt. Ein überstehendes Seilende wird einfach abgeschnitten.

In der Draufsicht gemäss Figur 2 ist der zentrische Einlauf des Seils 5 und der spiralige Verlauf der Nut 3 erkennbar.

Beim zweiten Ausführungsbeispiel gemäss Fig. 3 geht der kegelstumpfförmige Haltekörper 1' am unteren Körperende 7 in einen zylinderförmigen Körperteil 15 über. Dementsprechend ist der zylinderförmige Hülsenteil 9' der Glocke 8' länger ausgebildet. Die am kegelstumpfförmigen Haltekörper 1' spiralförmig eingeschnittene Nut 3 wird am zylinderförmigen Körperteil 15 schraubenförmig mit mindestens einer Umschlingung fortgesetzt. Dadurch kann die Pressung des Seils 5 im unteren Körperabschnitt 14 minimiert werden oder kann sogar gänzlich entfallen.

Die Variante nach Fig. 3 eignet sich besonders für grosse Lasten, bei denen eine längere Nut erforderlich ist. Grosse Lasten 13 führen dann nicht zu unerwünscht breiteren, sondern zu längeren Haltevorrichtungen. Durch enges Zusammenlegen der Umschlingungen im unteren Abschnitt kann der Längenzuwachs noch minimiert werden. Auch bei grossen Seildurchmessern wird nur die Länge der Seilendverbindung vergrössert, die Schlankheit aber wird beibehalten.

Der Haltekörper 1 kann auch zylindrisch ausgebildet sein, wobei dann die Nut 3 im ersten Abschnitt 4 sehr tief eingeschnitten werden muss, um einen sich öffnenden spiralförmigen Verlauf zu erzeugen.

Bei dem dritten Ausführungsbeispiel gemäss Fig. 4 sind Haltekörper 1" und Glocke 8" assymetrisch zur Achse 11 der Zugkraft 12 ausgebildet. Die zylinderförmige Hülse 9" ist exzentrisch zur Achse 11 angeordnet, in deren Verlängerung die Last 13" angehängt ist. Der übrige Aufbau und die Funktionsweise dieser Seilendverbindung ist mit den vorangehend beschriebenen Varianten identisch. Der Vorteil der asymmetrischen Form ist ein geringerer Platzbedarf an der abgeflachten Seite, sodass zwei oder vier Seilendverbindungen direkt bzw. sternförmig aneinander anliegend angeordnet werden können. Dies ermöglicht einen ausserordentlich geringen Seilabstand.

Die Pressung des Seils 5 im unteren Körperabschnitt 14 kann ausser durch die Nuttiefe auch durch die Neigung der Glockenwand gegenüber der Mantelfläche 2 beeinflusst werden. Dann hat die Glockenwand gegenüber der Mantelfläche 2 eine geringere Neigung. Dadurch wird eine Pressung im ersten Abschnitt 4 ausgeschlossen und im zweiten, unteren Abschnitt 14 verstärkt.

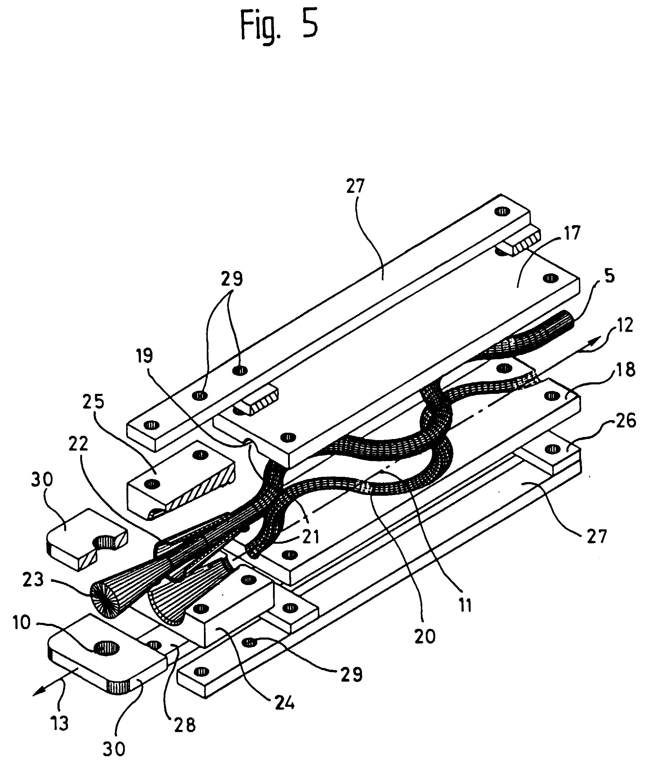

Bei der Seilendverbindung gemäss Fig. 5 ist das Seil nur in einer Ebene gekrümmt. In einer ersten Halteplatte 17 ist eine in der Ebene der Halteplatte und um die Achse 11 der Zugkraft 12 mäanderförmig verlaufende erste Halbnut 19 angeordnet. In einer zweiten Halteplatte 18 verläuft eine korrespondierende zweite Halbnut 20. Bei spaltfrei aneinander anliegenden Halteplatten 17, 18 wird das Kunststoffseil 5 von der aus den beiden Halbnuten 19, 20 gebildeten Nut 21 ohne Seitenpressung vollständig aufgenommen. Das Seil 5 verläuft, ausser im Einlauf 6, stark gekrümmt schlaufenartig um die Achse 11 der Zugkraft 12 und wird von den miteinander verschraubten Halteplatten 17, 18 lose umfasst. Das aus der Nut austretende Seilende ist aufgespleisst in einer konischen Hülse 22 gefasst, die mit einer seilwerkstoffgerechten Vergussmasse ausgegossen ist, womit sich ein Vergusskegel 23 bildet. Die konische Hülse 22 wird von einer ersten Aufnahmeplatte 24 und einer zweiten Aufnahmeplatte 25 lose umschlossen. Die Halteplatten 17, 18 sind mit Distanzplatten 26, Seitenstegen 27 und einem Mittelsteg 28 lösbar mittels Bohrungen 29 durchdringenden Schrauben verbunden. Am Mittelsteg 28 sind seilendseitig Endplatten 30 angeordnet, an denen die Last in Richtung des Pfeils 13 angreift.

Die Nut 21 kann beispielsweise sinusförmig sein. Sie kann aber vorteilhaft auch mäanderförmig ausgebildet sein. Amplitude und Krümmungsradius werden an den in der Breite zur Verfügung stehenden Platz und an den Seildurchmesser angepasst. Der Krümmungsradius soll, jedenfalls im zweiten Abschnitt abhängig von der Seilsteifigkeit möglichst eng gewählt werden. Geeignet sind Radien vom etwa ein- bis sechsfachen des Seildurchmessers.

Die Halteplatten 17, 18 sind im dargestellten Ausführungsbeispiel massiv ausgebildet. Sie können aber am Aussenradius der Nutschlingen auch unterbrochen sein, was gegebenenfalls eine visuelle Prüfung des Seils ermöglicht. Im Interesse einer schlankeren Bauweise können die Halteplatten 17, 18 ohne die Stege 27, 28 direkt miteinander und mit den Aufnahmeplatten 24, 25 verschraubt werden.

Die in der Achse 11 wirkende Zugkraft 12 des Seils 5 wird im Seil 5 weitgehend durch Reibung in der Nut 21 abgebaut und auf die Halteplatten 17, 18 übertragen. Die am Seilende noch nicht durch Reibung in der Nut abgebaute Zugkraft 12 wird vom Vergusskegel 23 und der Hülse 22 auf die Aufnahmeplatten 24, 25 übertragen, ohne dass das Seil 5 an Zugfestigkeit verliert.

Die erfindungsgemässe Seilendverbindung findet vorwiegend Verwendung im Aufzugsbau. Bei Aufzugsanlagen sind Aufzugskabine und Gegengewicht mittels mehreren parallel geführten Seilen verbunden, die von einer Treibscheibe angetrieben werden und über Umlenkrollen laufen. Der seitliche Abstand der Seile wird von den Seilrillen der Treibscheibe und der Umlenkrolle vorgegeben und beträgt wenige Zentimeter. Es ist daher wichtig, dass die Aufzugskabine und das Gegengewicht mittels möglichst schlanker Seilendverbindungen mit den Seilen verbunden sind. Ausladende Seilendverbindungen würden den Seilstrang auffächern, was zu einem übermässigen Verschleiss der Seile und der Seilrillen führt, insbesondere wenn die Aufzugskabine oder das Gegengewicht in die Nähe der Treibscheibe oder der Umlenkrolle kommen.

In Aufzugsanlagen sind einerseits grosse Seillängen notwendig, andererseits besteht aus energetischen Gründen die Forderung nach möglichst kleinen bewegten Massen. Hochfestfaserseile aus eindimensionalen, langgestreckten Molekülketten und einer allseits schützenden Polyuretanhülle erfüllen diese Anforderungen. Sie sind leicht, haben einen kleinen Durchmesser und eine grosse Zugfestigkeit. Ohne Verminderung der Zugfestigkeit können solche Seile lediglich kleine durch Klemmung oder Pressung hervorgerufene Querkräfte absorbieren. Die erfindungsgemässe Seilendverbindung gleicht diesen Nachteil aus, indem die Zugkraft im Seil weitgehend über den hohen Reibwert der Polyuretanhülle in der Nut abgebaut wird. Von Vorteil ist auch, dass ummantelte Kunststoffseile ohne Auftrennung oder Beschädigung der schützenden Ummantelung befestigt werden können. Die Anwendung der Erfindung beschränkt sich jedoch nicht auf ummantelte Kunstfaserseile und nicht auf den Aufzugsbau.

## Patentansprüche

1. Seilendverbindung für ein Kunststoffseil (5) bestehend aus einer Einrichtung (10) zum Befestigen einer Kabine oder eines Gegengewichtes einer Aufzugsanlage und einer Einrichtung zum Festhalten des Kunststoffseils, welche nächst dem Eintritt des Seils (5) einen ersten hülsenförmigen Abschnitt (4) aufweist, dessen Innenquerschnitt mindestens so weit ist wie der Querschnitt des einlaufenden Seils und dessen Einlauf (6) in Richtung des gespannten Seils ausgerichtet ist und welche einen nachgeordneten zweiten Abschnitt (14) aufweist, in dem das Seil (5) vorzugsweise durch Seitenpressung gehalten wird, die mit ansteigender Zugkraft des Seiles (5) zunimmt, wobei der erste hülsenförmige Abschnitt (4) der Einrichtung zum Festhalten des Seils (5) eine um eine in der Richtung des gespannten Seils (5) liegenden Achse (11) verlaufende gekrümmte Nut (3) aufweist, in der das einlaufende Seil (5) bei Zugbeanspruchung lediglich unter Reibung mit den Nutwandungen (3, 21) in Verbindung steht, sodass die Zugkraft sukzessive von der Nut (3, 21) aufgenommen wird.

2. Seilendverbindung nach Anspruch 1,
dadurch gekennzeichnet, dass die Krümmung der Nut (3, 21) vom zunächst geradlinigen Einlauf (6) her allmählich immer stärker werdend zunimmt.

3. Seilendverbindung nach Anspruch 2,
dadurch gekennzeichnet, dass nach dem schwächer gekrümmten ersten Abschnitt (4) der Krümmungsradius der Nut (3, 21) etwa das ein- bis sechsfache des Seildurchmessers beträgt.

4. Seilendverbindung nach einem der Ansprüche 1 bis 3,
dadurch gekennzeichnet,
dass die Einrichtung zum Festhalten des Seils (5) einen Haltekörper (1) aufweist, an dessen kegelstumpfförmiger Mantelfläche (2) die Nut (3) spiralförmig eingeschnitten ist.

5. Seilendverbindung nach Anspruch 4,
dadurch gekennzeichnet,
dass die Nuttiefe in dem ersten Abschnitt (4) dem Seildurchmesser des Kunststoffseiles (5) entspricht und im weiteren Verlauf abnimmt, so dass das Seil (5) vom Einlauf (6) her gesehen zunehmend aus der Nut (3) hervortritt und dass der zweite Abschnitt eine zu dem in seiner Aussenkontur kegelstumpfförmigen Haltekörper (1) koaxiale hohlkegelförmige Glocke (8) aufweist, die den Haltekörper (1) umschliesst und die am oberen Ende eine Öffnung für den Seileintritt und am unteren Ende die Einrichtung (10) zum Befestigen einer Last aufweist.

6. Seilendverbindung nach Anspruch 4 oder 5,
dadurch gekennzeichnet,
dass die Steigung der spiralförmigen Nut (3) vom Einlauf (6) her gesehen abnimmt und am seilendseitigen Körperende (7) in einer Schraubenlinie endet.

7. Seilendverbindung nach einem der vorhergehenden Ansprüche,
dadurch gekennzeichnet,
dass der Haltekörper (1) am nachgeordneten Körperende (7) einen zylinderförmigen Körperteil (15) aufweist, wobei sich die am Haltekörper (1) spiralförmig eingeschnittene Nut (3) am zylinderförmigen Körperteil (15) schraubenförmig fortsetzt und von einem zylinderförmigen Hülsenteil (9) der Glocke (8) umfasst wird.

8. Seilendverbindung nach einem der Ansprüche 5 bis 7,
dadurch gekennzeichnet,
dass die Glockenwand der Glocke (8) gegenüber der Mantelfläche (2) des kegelstumpfförmigen Haltekörpers (1) eine geringere Neigung aufweist.

9. Seilendverbindung nach einem der Ansprüche 1 bis 3,
dadurch gekennzeichnet,
dass die Einrichtung zum Festhalten des Seils (5) eine erste Halteplatte (17) mit einer ersten mäanderförmigen Halbnut (19) und eine zweite Halteplatte (18) mit einer korrespondierenden zweiten mäanderförmigen Halbnut (20) aufweist, welche Halteplatten (17, 18) in spaltfrei aneinander anliegendem Zustand eine aus den beiden Halbnuten (19, 20) gebildete Nut (21) aufweisen, die das Kunststoffseil (5) vollständig aufnimmt.

10. Seilendverbindung nach Anspruch 9,
gekennzeichnet durch eine seilendseitige Pressvorrichtung, bestehend aus einer konischen Hülse (22), in die das in einem Vergusskegel (23) aufgespleisste Seilende eingelegt ist.

## Claims

1. Cable end connection for a synthetic material cable (5) and consisting of an equipment (10) for the fastening of a cage or a counterweight of a lift plant and an equipment for the retention of the synthetic material cable, which equipment next to the entry of the cable (5) comprises a first sleeve-shaped portion (4), the internal cross-section of which is at least as wide as the cross-section of the entering cable and the inlet (6) of which is oriented in the direction of the tensioned cable, and which equipment comprises a second portion (14), which is arranged behind the first portion and in which the cable (5) is retained preferably by lateral pressure which increases with increasing tension force of the cable (5), wherein the first sleeve-shaped portion (4) of the equipment for the retention of the cable (5) displays a curved groove (3), which extends around an axis (11) lying in the direction of the tensioned cable (5) and in which the incoming cable (5) in the case of tension stress stands in connection with the groove walls (3, 21) merely under friction so that the tension force is successively taken up by the groove (3, 21).

2. Cable end connection according to claim 1, characterised thereby, that the curvature of the groove (3, 21) increases becoming gradually ever greater from the initially rectilinear inlet (6).

3. Cable end connection according to claim 2, characterised thereby, that the radius of curvature of the groove (3, 21) after the more weakly curved portion amounts to about 1 to 6 times the cable diameter.

4. Cable end connection according to one of the claims 1 to 3, characterised thereby, that the equipment for the retention of the cable (5) comprises a retaining body (1), at the frusto-conical envelope surface (2) of which the groove (3) is incised spirally.

5. Cable end connection according to claim 4, characterised thereby, that the groove depth in the first portion (4) corresponds with the cable diameter of the synthetic material cable (5) and reduces in the further course so that the cable (5) as seen from the inlet (6) protrudes increasingly from the groove (3) and that the second portion comprises a hollow conical bell (8), which is co-axial with the retaining body (1) of frusto-conical outline and surrounds the retaining body (1) and which comprises an opening for the cable entry at the upper end and the equipment (10) for the fastening of a load at the lower end.

6. Cable end connection according to claim 4 or 5, characterised thereby, that the pitch of the spiral groove (3) as seen from the inlet (6) reduces and ends in a helical line at the body end (7) at the end of the cable.

7. Cable end connection according to one of the preceding claims, characterised thereby, that the retaining body (1) at the body end (7) arranged therebehind comprises a cylindrical body part (15), wherein the groove (3), which has been cut in spiral shape into the retaining body (1), continues in helical shape at the cylindrical body part (15) and is encompassed by a cylindrical sleeve part (9) of the bell (8).

8. Cable end connection according to one of the claims 5 to 7, characterised thereby, that the bell wall of the bell (8) displays a smaller slope than the envelope surface (2) of the frusto-conical retaining body (1).

9. Cable end connection according to one of the claims 1 to 3, characterised thereby, that the equipment for the retention of the cable (5) comprises a first retaining plate (17) with a first meander-shaped half groove (19) and a second retaining plate (18) with a corresponding second meander-shaped half groove (20), which retaining plates (17, 18) in the state, in which they lie each gaplessly against the other, display one groove (21), which is formed of the two half grooves (19, 20) and receives the synthetic material cable (5) completely.

10. Cable end connection according to claim 9, characterised by a pressing device at the cable end and consisting of a conical sleeve (22), into which the cable end fanned out into a moulded cone (23) is laid.

## Revendications

1. Raccord d'extrémité pour un câble en matière plastique (5), formé d'un dispositif (10) pour fixer une cabine ou un contre-poids d'une installation d'ascenseur, et d'un dispositif pour bloquer le câble, qui comporte tout près de l'entrée du câble (5) une première section en forme de manchon (4) dont la section transversale intérieure est au moins aussi large que la section transversale du câble entrant et dont l'entrée (6) est orientée dans le sens du câble tendu, et qui comporte une seconde section (14) située en aval dans laquelle le câble (5) est maintenu de préférence par une pression latérale qui augmente avec la force de traction du câble (5), étant précisé que la première section en forme de manchon (4) du dispositif pour bloquer le câble (5) comporte une rainure courbe (3) qui s'étend autour d'un axe (11) situé dans le sens du câble (5) tendu et dans laquelle le câble (5) entrant est relié par simple friction aux parois de la rainure (3, 21), lors d'une contrainte de traction, de sorte que la force de traction est reçue successivement par la rainure (3, 21).

2. Raccord d'extrémité de câble selon la revendication 1, caractérisé en ce que la courbure de la rainure (3, 21) va en augmentant progressivement à partir de l'entrée (6) tout d'abord linéaire.

3. Raccord d'extrémité de câble selon la revendication 2, caractérisé en ce que le rayon de courbure de la rainure (3, 21), après la première section (4) plus faiblement courbée, est égal à environ une à six fois le diamètre du câble.

4. Raccord d'extrémité de câble selon l'une des revendications 1 à 3, caractérisé en ce que le dispositif pour bloquer le câble (5) comporte un corps de support (1) sur la surface latérale tronconique (2) duquel la rainure (3) est réalisée en spirale.

5. Raccord d'extrémité de câble selon la revendication 4, caractérisé en ce que la profondeur de la rainure correspond dans la première section (4) au diamètre du câble en matière plastique (5) puis va en diminuant, de sorte que le câble (5) sort de plus en plus de la rainure (3) à mesure qu'il s'éloigne de l'entrée (6), et en ce que la seconde section comporte une cloche en forme de cône creux (8) qui est coaxiale par rapport au corps de support (1) à contour extérieur tronconique, qui entoure le corps de support (1) et qui comporte à son extrémité supérieure une ouverture pour l'entrée du câble, et à son extrémité inférieure le dispositif (10) pour fixer une charge.

6. Raccord d'extrémité de câble selon la revendication 4 ou 5, caractérisé en ce que le pas de la rainure en spirale (3) va en diminuant à partir de l'entrée (6) et se termine, à l'extrémité (7) du corps située côté extrémité du câble, par une hélice.

7. Raccord d'extrémité de câble selon l'une des revendications précédentes, caractérisé en ce que le corps de support (1) comporte à son extrémité située en aval (7) un élément de corps cylindrique (15), la rainure (3) réalisée en spirale sur le corps de support (1) se prolongeant en hélice sur l'élément de corps cylindrique (15) et étant entourée par un élément en forme de manchon cylindrique (9) de la cloche (8).

8. Raccord d'extrémité de câble selon l'une des revendications 5 à 7, caractérisé en ce que la paroi de la cloche (8) présente une inclinaison plus faible que la surface latérale (2) du corps de support tronconique (1).

9. Raccord d'extrémité de câble selon l'une des revendications 1 à 3, caractérisé en ce que le dispositif pour bloquer le câble (5) comprend une première plaque de support (17) pourvue d'une première demi-rainure sinueuse (19), et une seconde plaque de support (18) pourvue d'une seconde demi-rainure sinueuse correspondante (20), lesdites plaques de support (17, 18) définissant, lorsqu'elles sont appliquées l'une contre l'autre sans interstice, une rainure (21) qui est formée par les deux demi-rainures (19, 20) et qui reçoit entièrement le câble en matière plastique (5).

10. Raccord d'extrémité de câble selon la revendication 9, caractérisé par un dispositif presseur, côté extrémité de câble, qui est formé par un manchon conique (22) dans lequel est placée l'extrémité du câble épissée dans un cône de scellement (23).
